# EUROPEAN PATENT SPECIFICATION

(11) **EP 2 784 246 B1**
(45) Date of publication and mention of the grant of the patent: **19.04.2017**
(21) Application number: 12821260.2
(22) Date of filing: 26.11.2012
(51) Int. Cl.: E04H 6/14, B60L 11/18

(54) **FACILITY FOR PARKING AND RECHARGING ELECTRICAL VEHICLES**
VORRICHTUNG ZUM PARKEN UND WIEDERAUFLADEN VON ELEKTROFAHRZEUGEN
INSTALLATION POUR LE STATIONNEMENT ET LA RECHARGE DE VÉHICULES ÉLECTRIQUES

(30) Priority: 25.11.2011 ES 201131912
(43) Date of publication of application: 01.10.2014
(73) Proprietor: Urban Resilience S.L., 08980 Barcelona (ES)
(72) Inventor: SALA BRANCHADELL, Jordina, Sant Feliu de Llobregat E-08980 Barcelona (ES); SALA BRANCHADELL, Anna, Sant Feliu de Llobregat E-08980 Barcelona (ES)
(74) Representative: Manresa Val, Manuel
(86) International application number: PCT/ES2012/070828
(87) International publication number: WO 2013/076346

(56) References cited:
- CN-U- 201 763 019
- DE-A1- 2 304 856
- ES-A1- 2 166 276
- ES-A2- 2 067 386
- ES-A6- 2 014 807
- FR-A- 853 088
- GB-A- 2 071 630
- US-A- 4 601 628

## Description

Facility for parking and recharging electrical vehicles of the type comprising platforms where the electrical vehicles or batteries are parked and/or kept connected to the electricity supply, means for keeping said platforms in a horizontal position in all the facility positions and an access for vehicles or batteries to the inside of the facility, characterised in that it comprises: at least two rings per platform, which are arranged opposite one another and parallel to one another, with the ring immediately following a given one, belonging to another platform, or being partially in front of or partially behind said ring, at least two groups of two guiding tracks, a first and a second, where the given ring is positioned in the first track and the next immediate ring is positioned in the second track, means for driving the said rings to allow said facility to move said rings, electrical connection and recharge means for rechargeable batteries on at least one platform or with them all connected together via conductor relays, electrical energy accumulator means that store and supply energy to the electrical recharging means, so that while the vehicles or batteries are parked inside the facility, the rechargeable batteries are being charged at least by the smart electrical recharging means.

### BACKGROUND TO THE INVENTION

In the state of the art different rotational technical facilities are known, particularly for storing vehicles.

Thus, British patent No. 2071630, dated 1980, consists of a car park, made up of a cylinder, inside which spaces are compartmented for positioning vehicles, such that said parking is provided with rotating mechanisms and allows the vehicles parked inside the cylinder to be moved.

A very similar system had already been envisaged in 1939, in the French patent No. 853,088, where the vehicles were stored or parked in the form of concentric circles, although in some other embodiment it can also be noticed that the ellipsoidal form was adopted.

In US patent No. 4.601.628 from 1984 a rotary parking is described, with different concentric circles with spaces for parking vehicles, which allows the circles to be used independently, whereby using the outermost circle does not imply using the subsequent circle.

Spanish patent No. 9300319 (2067386) "MECANISMO PARA APARCAMIENTO O ALMACENAMIENTO DE VEHICULOS O MERCANCIAS", in the name of Mr. Federico Moreno Nieves, from 1993, relates to a mechanism for parking or storing vehicles or goods, which consists of a train of platforms which, being suspended from rolling axes tied together using tie rods, form a chain unit that rolls on pairs of tracks arranged on two parallel plans forming a closed circuit and on which platforms the cars or goods containers are moved without having to move by their own means, with a single motor system being provided outside the train which allows the whole unit to be moved in a synchronised and automated fashion, obtaining minimum surface occupancy per car park space, the mechanism is designed so that the vehicle or container has easy access to the platform on which it is going to be parked and from the time it is parked all movements to store and return it are automatic and without manoeuvring the parked vehicle. The characteristic aspect of that invention is that the cells where the vehicles are parked hang from rolling axes tied together by tie rods.

Another Spanish patent No. 8902524 (ES2014807) "CARRUSEL PARA APARCAMIENTO Y ALMACENAJE", in the name of Mr. José María Quer Puignau, from 1989, relates to a carousel for parking and storing. It comprises continuous pulling assembled in a framework and integral with the platforms, each of which supports a vehicle or a load. The continuous pulling means are two continuous chains assembled on the two sides of a framework defining at least two straight, horizontal sections and two straight, vertical sections, with each straight horizontal section corresponding to one of the floors of the framework; in that the platforms comprise a rigid base where the vehicle or load is placed and suspension elements integral with a bar joined at the ends thereof to the two chains; and in that the framework comprises on each floor sliding support means for the platforms. It enables parking in reduced width premises. It is designed especially for premises with a reduced width, and comprises a carousel for parking and storing vehicles, which comprises a framework and pulling means, assembled on said framework, with said pulling means also being integral with platforms that comprise some vehicles or loads.

The actual inventor of Spanish patent No. 9901922 (ES2166276) "INSTALACION PARA APARCAMIENTO DE VEHICULOS", from 1999, which relates to a facility for parking vehicles, comprises some areas, cylindrically shaped, which have been sized appropriately with each one making up a platform to support a vehicle with facility driving means to locate said area in a zone for loading and unloading vehicles, with said facility being developed inside a closed circuit, like a carousel, with guides, and with means for keeping said platform horizontal in all the positions of the area throughout the circuit. It is innovative in that it uses a triangular mechanism that keeps the platforms horizontal in all the area positions.

### BRIEF DESCRIPTION OF THE INVENTION

This invention is an improvement in the renewable energy sector, as it implies adapting facilities for parking vehicles to the electrical vehicles sector, which is outlined as the future of the car industry.

The closest document is Spanish patent No. 9901922 (ES2166276). Said document solves the problem of traction and stability on the several platforms.

The problem lies in adapting it to the technology of electrical vehicles which, as a safety measure, needs to improve the insulation of consecutive platforms.

Thus, each platform is limited by two rings, which are arranged on a first guide. The following platform is also limited by two rings, and said rings are arranged on a second guide. This way, each platform is isolated from those immediately following, thus improving their safety system, and separating them more.

At the same time, means are provided for recharging the electrical batteries, which for example consist in solar panels that capture the energy that they will subsequently supply to the respective electrical vehicles.

Also an exchange device can be provided for vehicle batteries, if the vehicles are parked in the facility or on it (outside it) and the battery changeover takes places under the vehicle.

An object of this invention is a facility for parking and recharging electrical vehicles of the type comprising platforms where the electrical vehicles and batteries are parked and/or kept connected to the electricity supply, means for keeping said platforms horizontal in all the facility positions, and access for vehicles or batteries to the inside of the facility, characterised in that it comprises: at least two rings per platform, which are arranged opposite and parallel one another, with the platform immediately following a given ring, belonging to another platform, or being partially in front of or partially behind said ring, at least two groups of two guiding tracks, a first and a second, where the given ring is positioned in the first track and the next immediate ring is positioned in the second track, means for driving said rings which allow said facility to move said rings, electrical connection and recharging means for rechargeable batteries on at least one platform or with them all connected together via conductor relays, electrical energy accumulator means that store and supply energy to the electrical recharging means, so that while the vehicles or batteries are parked inside the facility, the rechargeable batteries are being charged by the smart electrical recharging means.

### BRIEF DESCRIPTION OF THE DRAWINGS

In order to facilitate the explanation three sheets of drawings are attached which illustrate a practical embodiment that is provided as a non-limiting example of the scope of the invention:
- Figure 1 is a perspective view of a facility that is the object of this invention.
- Figure 2 is a view of Figure 1 with a transparency.
- Figure 3 is a view of the mechanism of rings and guides.
- Figure 4 is a view of the battery exchange in a vehicle arranged on the facility (with some elements omitted in the interest of clarity), outside it,
- Figure 5 is an example of a battery container, and
- Figure 6 is a way of installing said rechargeable batteries with the container in a truck.

### SPECIFIC EMBODIMENT OF THE INVENTION

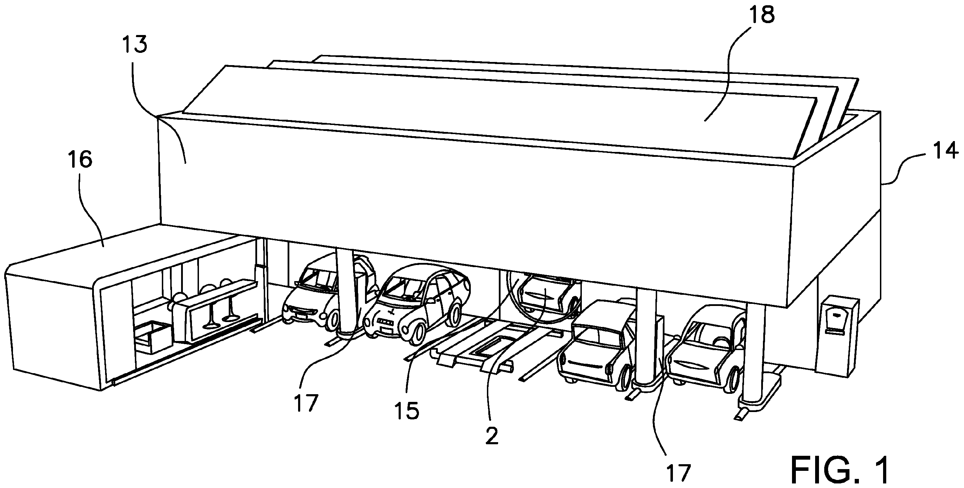

This way, Figure 1 shows a facility 14, solar panels 18, accumulator means 13, and access 15, electrical vehicles 2, a rest area 16 and external electrical recharging means 17.

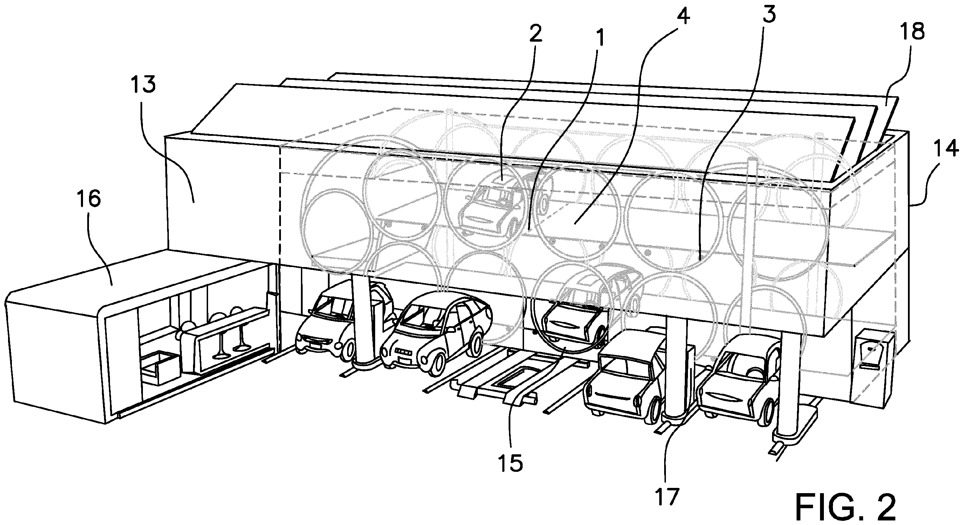

Figure 2 illustrates facility 14, solar panels 18, accumulator means 13, access 15, electrical vehicles 2, platforms 1, means 3 for keeping the platforms horizontal, rest area 16 and external electrical recharging means 17.

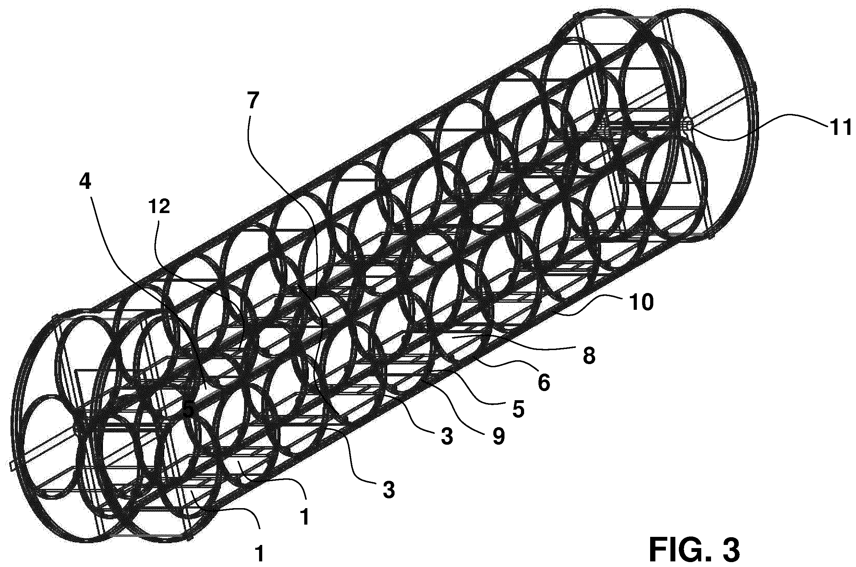

Figure 3 illustrates platforms 1 and the next immediate platform 8, a ring 4, its parallel ring 7 and its next immediate ring 5, a first 9 and a second 10 guiding track, means 3 for keeping the platforms horizontal and driving means 11.

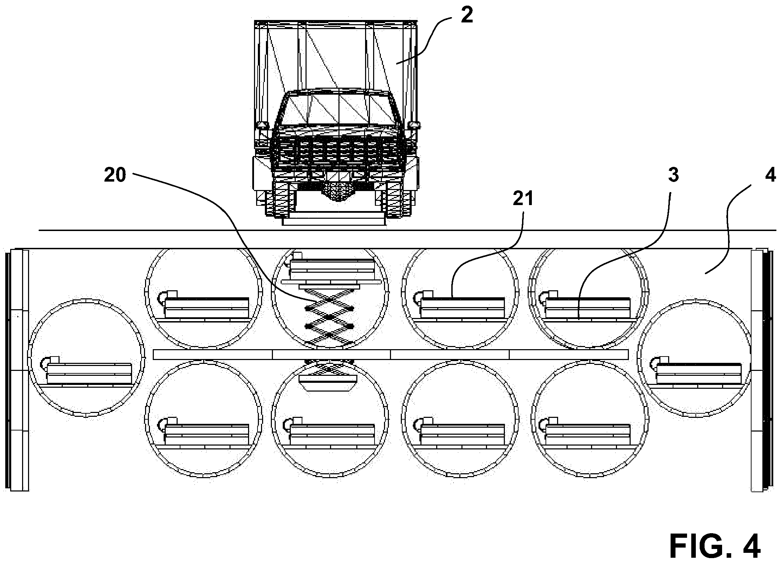

Figure 4 illustrates facility 14, electrical vehicles 2, platforms 3, batteries 21 and others for exchanging batteries 20.

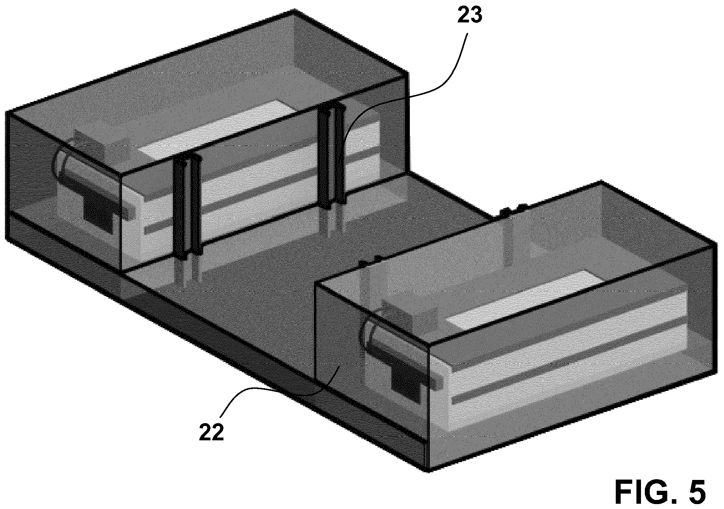

Figure 5 illustrates a battery container 22 with guides 23.

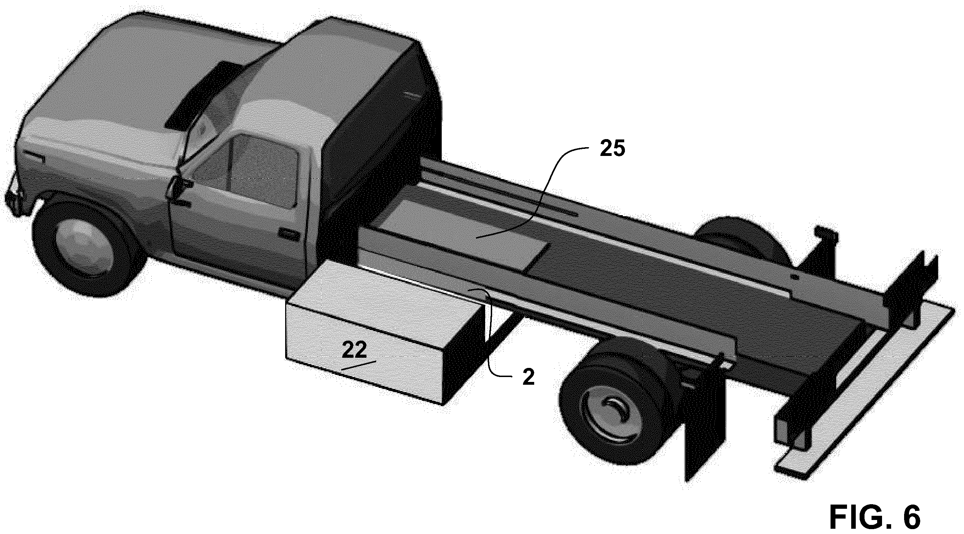

Lastly Figure 6 illustrates electrical vehicle 2, battery container 22 and an anti-falling safety element 25.

So, in a specific embodiment, in said facility 14, an electrical vehicle 2 is recharged as follows.

An electrical vehicle 2 that needs recharging, would access the inside via access 15. The car would be placed on a platform 1 and the means 3 for keeping it horizontal would keep platform 1 and electrical vehicle 2 horizontal in all the facility positions, in other words, as said platform 1 moves inside facility 14.

Between the top floor and the bottom floor of platforms, there is an intermediate base 4.

As indicated above, in order to increase the electrical isolation characteristics a very specific configuration of platforms 4, 8 has been developed, such that a given platform 4 is electrically isolated from the next immediate platform 8.

Each platform 4 comprises at least two rings per platform 5, 7, preferably one at each end of the platform, through which electrical vehicles 2 pass.

Said rings 5, 7 are arranged in front of and parallel to each other, with the next immediate ring 6 to one given one 5, belonging to another platform 8, or being partially in front of or partially behind said ring 5. This implies that a platform 1 is isolated with respect to the next one.

Also, its driving system is also independent as at least two groups of two guided tracks are provided, a first one for the front rings 5 and another one for the rear rings 7.

The configuration of the two said guiding tracks, the first 9 is where the given ring 5 is placed and the second one 10, is where the next immediate ring 6 is placed, allows each platform 1 to operate autonomously, with respect to the next platform.

Also, facility 14 is provided with driving means 11 for said rings 5, 6, 7 that allow said facility to move said rings 5, 6, 7 and this way when a client needs his electrical vehicle 2, said driving means 11 start-up rings 5, 6, 7 that move until they reach the exit position or where the owner is located.

While electrical car 2 is inside facility 14 it is recharged, preferably slowly, by the electrical recharging means 12 for rechargeable batteries, located on each platform 1.

The facility comprises electrical energy accumulator means 13 that supply energy to the electrical recharging means, so that while vehicles 2 are parked inside facility 14, their rechargeable batteries are being charged by electrical recharging means 12.

As a safety measure, when the operator accesses the inside of facility 14 via access 15, the electrical recharging means are stopped by a double interruption system 12 of rechargeable batteries, so as to prevent any possible electrical discharges.

There is also the possibility that the electrical vehicle fleets choose to change the rechargeable batteries inside vehicles 2.

To do this they can choose, depending on the model of electrical vehicle 2 and rechargeable battery, because the means for changing the batteries behave vertically at the bottom of vehicle 2, or they act horizontally at the side, front or rear of vehicle 2, which will be described below.

It has been envisaged to install vehicle weight and/or position sensors, to be able to manage the positioning of vehicles and balance the facility. Also, this way at all times it is possible to know what vehicle 2 is, what charge it has and how long it will take, and therefore it is possible to order them internally and facilitate an organised exit of fully charged vehicles 2.

In cities, it may be advisable that facility 14 be at least partially underground, or fully on the surface, due to visual impact, geology and water table conditions.

In other places like industrial estates, park and rides, etc., the option shown in Figures 1 and 2 can be chosen, as it reduces installation costs because it is not necessary to dig underground.

So, as shown in Figure 4, the facility could only house batteries 21, this way the facility would also be much smaller.

Said facility 14 would work the same way. A vehicle 2 would be positioned in a specific place and battery exchanging means 20 would remove battery 21 from inside the vehicle. Then facility 14 would be lowered and moved until battery 21 was left on a free platform 3 so that it starts recharging.

Next, it would select the nearest charged battery 21 and said battery exchange means 20 would raise said battery 21 to vehicle 2 where it would be installed.

A possibility to standardise the exchange process is to provide U-shaped containers 22 inside which batteries 21 are provided (Fig. 5). This would mean that the same guiding system 23 and the electricity connection system between electrical vehicle 2 and battery 21 could be used for all electrical vehicles 2, because the only thing that would change are batteries 21, which are changed, but the structure of container 22 remains the same.

Also, the U-shape of the container gives stability to electrical vehicle 2, because batteries 21 would be beside each other.

Also when container 22 is installed in vehicle 2, guides 23 would allow it to be guided to fit in vehicle 2, and be blocked by anti-fall safety element 25 (Figure 6), which when turned 90º from the position shown in Figure 6, would block the container like a pin.

Also one facility 14 could be stacked on top of another that is, considering facility 14 as a module that interconnects with other modules.

This way it would be possible to have a greater volume of batteries 21 under charge and it would be possible to choose one specific one, raise it and install it in electrical vehicle 2. To do this, it could be determined that battery exchanging means 20 like a goods lift, could stop on each floor (each facility would have two floors, platforms 1 that go on top and the one that go underneath), this way, the trajectory to finding the recharged battery 21 would be shorted and only one facility 14 would move.

From this invention a platform management system could also be claimed. This consists in the first management system that uses said facilities to recharge electrical vehicles.

The inventor has noticed that in cities there are extra fast chargers that take up a parking space. If we stop to consider that at one time ten vehicles may come together to the facility, the extra fast charger connected to the electricity supply would not be viable.

So, using this facility it would be possible to recharge the vehicles in just 15 minutes and without taking up a parking space on the public road, and also, it would prevent overloading by working disconnected from the electricity supply.

In other words, it would be a management system where the vehicles would be parked and at the same time they would be recharged, saving 50% of space on the public road with respect to the present system.

One of the advantages of this facility is that by means of the photovoltaic plates solar energy can be converted into electrical energy, reused, accumulated and even sold, or even used subsequently.

It has been envisaged that the vehicles that can park outside would be fast charging, whereas those that are inside the facility, preferably would be charged slowly, and certain fast charge platforms could be provided.

A rest area is added for drivers while the vehicle batteries are recharged.

Solar panels can be used to recharge accumulators without any additional cost to storing energy in the facility.

This invention describes a new facility for installing for parking and recharging electrical vehicles. The examples mentioned here are non-limiting with respect to this invention, and therefore it can have various applications and/or adaptations, all within the scope of the following claims.

## Claims

1. Facility for parking and recharging electrical vehicles of the type comprising platforms (1) where electrical vehicles (2) or batteries are parked and/or kept connected to an electricity supply, means for keeping (3) said platforms horizontal in all the positions in the facility and an access for vehicles or batteries to the inside of facility (14) **characterised in that** it comprises:
- at least two rings per platform (5, 7) that are arranged opposite and parallel to one another, with the next immediate ring (6) to a given one (5), belonging to another platform (8), or being partially in front of or partially behind said ring (5),
- at least two groups of two guiding tracks, a first (9) and a second (10), where given ring (5) is positioned on first track (9) and next immediate ring (6) is positioned on second track (10),
- driving means (11) for said rings (5, 6, 7) that allow said facility to move said rings (5, 6, 7),
- electrical connection and recharging means (12) for rechargeable batteries on at least one platform or with them all connected together via conductor relays,
- electrical energy accumulator means (13) that store and supply energy to the electrical recharging means,
so that while vehicles (2) or batteries are parked inside the facility (14), the rechargeable batteries are being charged by smart electrical recharging means (12).

2. Facility, according to claim 1, **characterised in that** the electrical recharging means for rechargeable batteries (12) are able to stop when an operator enters via access (15) inside facility (14).

3. Facility, according to claim 1 or 2, **characterised in that** it comprises means for changing rechargeable batteries (20) of vehicles (2).

4. Facility, according to claim 3, **characterised in that** said means (20) behave vertically at the bottom of vehicle (2).

5. Facility, according to claim 3, **characterised in that** said means (20) behave horizontally, at the side, front or rear of vehicle (2).

6. Facility, according to claim 3 or 4 or 5, **characterised in that** it comprises a U-shaped container 22 carrying batteries, with guides 23.

7. Facility, according to any of the preceding claims, **characterised in that** it comprises weight and/or position sensors for vehicles (2) and platforms (4).

8. Facility, according to any of the preceding claims, **characterised in that** the facility (14) is at least partially underground.

9. Facility, according to any of the preceding claims, **characterised in that** the facility (14) is modular and stackable.

## Patentansprüche

1. Einrichtung zum Abstellen und Aufladen von Elektrofahrzeugen, derart, dass sie folgendes umfasst: Plattformen (1) umfasst, wo Elektrofahrzeuge (2) oder Batterien abgestellt bzw. an eine Stromversorgung angeschlossen bleiben, Mittel, um die Plattformen an allen Positionen in der Einrichtung horizontal zu halten (3), und einen Zugang für Fahrzeuge oder Batterien zur Innenseite der Einrichtung (14)
**dadurch gekennzeichnet, dass** sie umfasst:
- mindestens zwei Ringe pro Plattform (5, 7), die gegenüber voneinander oder parallel zueinander angeordnet sind, wobei der der direkt nächste Ring (6) von einem gegebenen Ring (5) zu einer anderen Plattform (8) gehört oder teilweise vor oder teilweise hinter dem Ring (5) ist,
- mindestens zwei Gruppen von zwei Führungsbahnen, eine erste (9) und eine zweite (10), wobei ein gegebener Ring (5) auf der ersten Bahn (9) und ein direkt nächster Ring (6) auf der zweiten Bahn (10) positioniert ist,
- Antriebsmittel (11) für die Ringe (5, 6, 7), die der Einrichtung ermöglichen, die Ringe (5, 6, 7) zu bewegen,
- elektrische Verbindungs- und Auflademittel (12) für Akkumulatoren auf mindestens einer Plattform oder mit diesen allen verbunden über Leitrelais,
- Speichermittel für elektrische Energie (13), die Energie speichern und sie den elektrischen Auflademitteln zuführen,
sodass während die Fahrzeuge (2) oder Batterien in der Einrichtung (14) abgestellt sind, die Akkumulatoren durch intelligente elektrische Auflademittel (12) aufgeladen werden.

2. Einrichtung nach Anspruch 1, **dadurch gekennzeichnet, dass** die elektrischen Auflademittel für Akkumulatoren (12) in der Lage sind, auszuschalten, wenn ein Bediener über den Zugang (15) in die Einrichtung (14) eintritt.

3. Einrichtung nach Anspruch 1 oder 2, **dadurch gekennzeichnet, dass** sie Mittel zum Wechseln von Akkumulatoren (20) von Fahrzeugen (2) umfasst.

4. Einrichtung nach Anspruch 3, **dadurch gekennzeichnet, dass** die Mittel (20) vertikal am Boden des Fahrzeugs (2) funktionieren.

5. Einrichtung nach Anspruch 3, **dadurch gekennzeichnet, dass** die Mittel (20) horizontal an der Seite, Vorderseite oder Rückseite des Fahrzeugs (2) funktionieren.

6. Einrichtung nach Anspruch 3 oder 4 oder 5, **dadurch gekennzeichnet, dass** sie einen U-förmigen Behälter 22, der Batterien trägt, mit Führungen 23 umfasst.

7. Einrichtung nach einem der vorherigen Ansprüche, **dadurch gekennzeichnet, dass** sie Gewichts- und Positionssensoren für Fahrzeuge (2) und Plattformen (4) umfasst.

8. Einrichtung nach einem der vorherigen Ansprüche, **dadurch gekennzeichnet, dass** die Einrichtung (14) mindestens teilweise unterirdisch ist.

9. Einrichtung nach einem der vorherigen Ansprüche, **dadurch gekennzeichnet, dass** die Einrichtung (14) modular und stapelfähig ist.

## Revendications

1. Installation pour garer et recharger des véhicules électriques du type qui comprend des plateformes (1) où des véhicules électriques (2) sont garés ou des batteries gardées et/ou restent connectés à une alimentation électrique, des moyens de maintenir (3) lesdites plateformes à l'horizontale dans tous les emplacements de l'installation et un accès, pour des véhicules ou des batteries, à l'installation (14) **caractérisée en ce qu'**elle comprend :
- au moins deux cercles par plateforme (5, 7) qui se font face et sont parallèles l'un par rapport à l'autre, le cercle situé juste à côté (6) d'un autre donné (5), appartenant à une autre plateforme (8), ou face partiellement ou partiellement derrière ledit cercle (5),
- au moins deux groupes de deux voies guides, une première (9) et une deuxième (10), où un cercle (5) est situé sur la première voie (9) et le cercle immédiatement après (6) sur la deuxième voie (10),
- des moyens d'actionnement (11) pour lesdits cercles (5, 6 ,7) qui permettent à ladite installation de faire déplacer lesdits cercles (5, 6,7),
- des moyens de connexion électrique et de recharge (12) pour batteries rechargeables sur au moins une plateforme ou toutes étant connectées par des relais conducteurs,
- des moyens d'accumulation d'énergie électrique (13) qui accumulent de l'énergie et alimentent les moyens de recharge électriques,
de telle manière que pendant que les véhicules (2) sont garés ou les batteries gardées à l'intérieur de l'installation (14), les batteries rechargeables sont rechargées avec les moyens de recharge électriques intelligents (12).

2. Une installation conformément à la revendication 1, **caractérisée en ce que** les moyens de recharge électriques pour batteries rechargeables (12) peuvent s'arrêter quand un opérateur entre par l'accès (15) à l'installation (14).

3. Une installation, conformément à la revendication, 1 ou 2, **caractérisée en ce qu'**elle comprend des moyens pour changer les batteries rechargeables (20) des véhicules (2).

4. Une installation conformément à la revendication 3, **caractérisée en ce que** lesdits moyens (20) fonctionnent verticalement dans la partie inférieure du véhicule (2).

5. Une installation conformément à la revendication 3, **caractérisée en ce que** lesdits moyens (20) fonctionnent horizontalement sur le côté, sur l'avant ou à l'arrière du véhicule (2).

6. Une installation conformément à la revendication 3, 4 ou 5, **caractérisée en ce qu'**elle comprend un conteneur 22 en U avec des guides 23.

7. Une installation conformément à l'une quelconque des revendications précédentes, **caractérisée en ce qu'**elle comprend des capteurs de poids et/ou de position des véhicules (2) et des plateformes (4).

8. Une installation conformément à l'une quelconque des revendications précédentes, **caractérisée en ce que** l'installation (14) est au moins partiellement en sous-sol.

9. Une installation conformément à l'une quelconque des revendications précédentes, **caractérisée en ce que** l'installation (14) est modulable et empilable.
